# EUROPEAN PATENT SPECIFICATION

(11) **EP 4 170 775 B1**
(45) Date of publication and mention of the grant of the patent: **29.04.2026**
(21) Application number: 21867008.1
(22) Date of filing: 18.08.2021
(51) Int. Cl.: H01M 4/38, H01M 10/052, H01M 10/42, H01M 4/134, H01M 4/13, H01M 4/36, H01M 50/451, H01M 4/62, H01M 4/66, H01M 10/0585, H01M 50/417, H01M 50/46, H01M 50/489, H01M 10/058, H01M 50/446, H01M 50/449, H01M 4/02

(54) **ELECTRODE ASSEMBLY COMPRISING SEPARATOR HAVING CONDUCTIVE LAYER FORMED THEREON, AND BATTERY CELL COMPRISING SAME**
ELEKTRODENANORDNUNG MIT SEPARATOR MIT DARAUF GEFORMTER LEITFÄHIGER SCHICHT UND BATTERIEZELLE DAMIT
ENSEMBLE D'ÉLECTRODES COMPRENANT UN SÉPARATEUR AYANT UNE COUCHE CONDUCTRICE FORMÉE SUR CELUI-CI, ET ÉLÉMENT DE BATTERIE LE COMPRENANT

(30) Priority: 11.09.2020 KR 20200116731
(43) Date of publication of application: 26.04.2023
(73) Proprietor: LG Energy Solution, Ltd., Seoul 07335 (KR)
(72) Inventor: KIM, Young Jae, Daejeon 34122 (KR); KIM, Min Ji, Daejeon 34122 (KR); CHAE, Jong Hyun, Daejeon 34122 (KR)
(74) Representative: Hoffmann Eitle
(86) International application number: PCT/KR2021/010924
(87) International publication number: WO 2022/055142

(56) References cited:
- JP-A- 2006 196 247
- JP-A- 2006 196 247
- JP-A- H0 997 625
- KR-A- 20130 123 568
- KR-A- 20130 123 568
- KR-A- 20180 034 120
- KR-A- 20190 120 800

## Description

### [Technical Field]

This application claims the benefit of priority to Korean Patent Application No. 2020-0116731 filed on September 11, 2020.

The present invention relates to an electrode assembly including a separator having a conductive layer formed thereon and a battery cell including the same. More particularly, the present invention relates to an electrode assembly including a separator having a conductive layer formed thereon so as to supplement short circuit of a conductive network caused by breakage of a negative electrode mixture layer as the result of expansion and contraction of a secondary battery due to charging and discharging thereof and a battery cell including the same.

### [Background Art]

A lithium secondary battery may be manufactured by placing an electrode assembly including a positive electrode, a negative electrode, and a separator interposed between the positive electrode and the negative electrode in a metal can or a case made of a laminate sheet and injecting an electrolytic solution into the metal can or the case.

Research to increase energy capacity per unit volume of the lithium secondary battery has been continuously conducted. In the case in which graphite is used as a negative electrode active material, a method of increasing the thickness of a negative electrode mixture layer is used. In this case, a problem in that the negative electrode mixture layer is broken, a problem in that swelling occurs at the time of coating, and a problem in that the negative electrode mixture layer is separated from a current collector occur.

In the case in which some of the negative electrode active material is substituted with a high-capacity silicon (Si) material, the thickness of the electrode mixture layer may be reduced, whereby the above problems may be solved.

The degree of expansion and contraction of silicon during charging and discharging processes is higher than other materials. For this reason, cracks are easily formed in the negative electrode mixture layer, and a conductive network in the negative electrode mixture layer is short-circuited. Such a phenomenon increases resistance of a battery cell.

Patent Document 1, which relates to a secondary battery including a non-aqueous electrolytic solution having high safety capable of preventing short circuit or explosion even in an overcharged state, in which high voltage is applied to the battery, discloses a separator having a conductive layer formed thereon, wherein the conductive layer has a predetermined range of resistivity.

Patent Document 1 recognizes an effect for preventing overcharging but does not suggest a solution to a problem in that dendrites are formed at a negative electrode using a silicon active material and a problem caused by overexpansion and overcontraction of the silicon active material.

Patent Document 2, which relates to a lithium secondary battery using a separator having a conductive layer applied thereto, discloses technology for preventing dendritic metal lithium having high reactivity from being cut and separated from a negative electrode.

Patent Document 2 does not recognize a problem caused when a silicon negative electrode is used, and does not suggest a solution to the above problem. Patent document 3 discloses a negative electrode for the lithium secondary battery which uses material electrochemically storing/releasing lithium as an active material. The electrode disclosed therein comprises: a first layer mainly comprising the active material formed on a current collector 1; a second layer mainly comprising a conductive material formed on the first layer; and a third layer 4 mainly comprising the active material formed on the second layer.

An effective solution to prevent deterioration in performance of a battery cell as the result of a negative electrode mixture layer being broken or cracked in the case in which a silicon negative electrode, the degree of expansion and contraction of which is great, is used, as described above, has not yet been suggested.

### (Prior Art Documents)

(Patent Document 1) Korean Patent Application Publication No. 2012-0062713 (2012.06.14)
(Patent Document 2) Korean Patent Application Publication No. 1999-010035 (1999.02.05)
(Patent Document 3) JP2006-196247 A

### [Disclosure]

### [Technical Problem]

The present invention has been made in view of the above problems, and it is an object of the present invention to provide an electrode assembly including a separator having a conductive layer formed on the surface thereof so as to wrap a silicon active material protruding from the surface of a negative electrode mixture layer in order to prevent breakage of a conductive network due to overexpansion and overcontraction of a negative electrode including the silicon active material and a battery cell including the same.

### [Technical Solution]

In order to accomplish the above object, an electrode assembly according to the present invention includes a positive electrode having a positive electrode mixture layer on at least one surface of a positive electrode current collector, a negative electrode having a negative electrode mixture layer on at least one surface of a negative electrode current collector, and a separator interposed between the positive electrode and the negative electrode, wherein the negative electrode mixture layer includes a silicon active material, a conductive layer is on at least one surface of the separator, and the thickness of the conductive layer is greater than 50% of the D50 particle size of the silicon active material.

In the electrode assembly according to the present invention, the separator may include a separator substrate including a porous material, an inorganic layer on at least one surface of the separator substrate, and the conductive layer on the outer surface of the inorganic layer.

In the electrode assembly according to the present invention, a first inorganic layer may be on one surface of the separator substrate, a second inorganic layer may be on the other surface of the separator substrate, and the conductive layer may be on only one of the first inorganic layer and the second inorganic layer positioned so as to face the negative electrode.

In the electrode assembly according to the present invention, the conductive layer may include a conductive agent and a binder.

In the electrode assembly according to the present invention, the conductive layer may be formed so as to have a thickness equivalent to 80% to 120% of the D50 particle size of the silicon active material.

In the electrode assembly according to the present invention, the negative electrode active material included in the negative electrode mixture layer may include 100% of the silicon active material.

In the electrode assembly according to the present invention, the inorganic layer may have a structure in which pores are present in the inorganic layer.

In the electrode assembly according to the present invention, the size of the pores present in the inorganic layer may be less than the size of pores present in the separator substrate.

In the electrode assembly according to the present invention, the conductive layer may have a porous structure.

In the electrode assembly according to the present invention, the loading amount of the positive electrode may be four to ten times the loading amount of the negative electrode.

In addition, the present invention provides a battery cell having the electrode assembly received in a metal can or a battery case including a laminate sheet.

The present invention provides a battery pack including the battery cell as a unit cell.

In the present invention, the above constructions may be variously combined.

### [Advantageous effects]

As is apparent from the above description, in an electrode assembly according to the present invention, a conductive layer formed on the surface of a separator may function as a conductive network of a negative electrode mixture layer, whereby it is possible to prevent interruption of an electron movement path even when cracks are formed in the negative electrode mixture layer due to overexpansion and overcontraction of a negative electrode active material.

In addition, the thickness of the conductive layer is limited to within a predetermined range, whereby it is possible to prevent deterioration in ionic conductivity and output characteristics due to addition of the conductive layer.

In addition, since a high-capacity silicon active material is used, it is possible to form the negative electrode mixture layer so as to have the same capacity as but a smaller thickness than in the case in which a carbon negative electrode active material is used, whereby it is possible to increase energy density of a battery cell as the result of a decrease in thickness thereof.

### [Best Mode]

Now, preferred embodiments of the present invention will be described in detail such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, limitations set forth in dependent claims may be applied to all embodiments described in this specification.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

An electrode assembly according to the present invention may include a positive electrode having a positive electrode mixture layer formed on at least one surface of a positive electrode current collector, a negative electrode having a negative electrode mixture layer formed on at least one surface of a negative electrode current collector, and a separator interposed between the positive electrode and the negative electrode. The negative electrode mixture layer may include a silicon active material. A conductive layer may be formed on at least one surface of the separator. The thickness of the conductive layer may be greater than 50% of the D50 particle size of the silicon active material.

The electrode assembly may be a stacked type electrode assembly, which is configured to have a structure in which at least one positive electrode and at least one negative electrode are stacked in the state in which a separator is interposed therebetween, a stacked and folded type electrode assembly, which is configured to have a structure in which stacked type unit cells, each of which includes a positive electrode and a negative electrode, are wound using a separation sheet, a laminated and stacked type electrode assembly, which is configured to have a structure in which stacked type unit cells, each of which includes a positive electrode and a negative electrode, are stacked in the state in which a separator is interposed therebetween, or a wound type electrode assembly, which is configured to have a structure in which a positive electrode and a negative electrode are wound in the state in which a separator is interposed therebetween.

For example, the positive electrode may be manufactured by applying a positive electrode mixture including a positive electrode active material to a positive electrode current collector and drying the positive electrode mixture. The positive electrode mixture may further optionally include a binder, a conductive agent, and a filler, as needed.

In general, the positive electrode current collector is manufactured so as to have a thickness of 3 µm to 500 µm. The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase adhesive force of the positive electrode active material. The positive electrode current collector may be configured in any of various forms, such as a film, a sheet, a foil, a net, a porous body, a foam body, and a non-woven fabric body.

The positive electrode active material is a material that is capable of inducing an electrochemical reaction. The positive electrode active material may be a lithium transition metal oxide including two or more transition metals. For example, the positive electrode active material may be, but is not limited to, a layered compound, such as lithium cobalt oxide (LiCoO₂) or lithium nickel oxide (LiNiO₂) substituted with one or more transition metals; a lithium manganese oxide substituted with one or more transition metals; a lithium nickel-based oxide represented by the chemical formula LiNi_{1-y}M_{y}O₂ (where M = Co, Mn, Al, Cu, Fe, Mg, B, Cr, Zn, or Ga, at least one of which is included, and 0.01≤y≤0.8); a lithium nickel cobalt manganese composite oxide represented by the chemical formula Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl), such as Li_{1+z}Ni_{1/3}Co_{1/3}Mn_{1/3}O₂ or Li_{1+z}Ni_{0.4}Mn_{0.4}Co_{0.2}O₂; or olivine-based lithium metal phosphate represented by the chemical formula Li₁₊ₓM_{1-y}M'_{y}PO_{4-z}X_{z} (where M = a transition metal, preferably Fe, Mn, Co, or Ni, M' = Al, Mg, or Ti, X = F, S, or N, - 0.5≤x≤0.5, 0≤y≤0.5, and 0≤z≤0.1).

The conductive agent is generally added so that the conductive agent accounts for 1 weight% to 30 weight% based on the total weight of the compound including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive material, such as a polyphenylene derivative, may be used as the conductive agent.

The binder is a component assisting in binding between the active material and the conductive agent and in binding with the current collector. The binder is generally added in an amount of 1 weight% to 30 weight% based on the total weight of the compound including the positive electrode active material. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer, styrene butadiene rubber, fluoro rubber, and various copolymers.

The filler is an optional component used to inhibit expansion of the electrode. There is no particular limit to the filler, as long as the filler is made of a fibrous material while the filler does not cause chemical changes in a battery to which the filler is applied. As examples of the filler, there may be used olefin-based polymers, such as polyethylene and polypropylene; and fibrous materials, such as glass fiber and carbon fiber.

For example, the negative electrode may be manufactured by applying a negative electrode mixture including a negative electrode active material to a negative electrode current collector and drying the negative electrode mixture. The above-described components, such as a conductive agent, a binder, and a filler, may be included as needed.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

As the negative electrode active material, for example, there may be used silicon; carbon, such as a non-graphitizing carbon or a graphite-based carbon; a metal composite oxide, such as LiₓFe₂O₃ (0≤x≤1), LiₓWO₂ (0≤x≤1), SnₓMe₁₋ₓMe'_{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; or a Li-Co-Ni based material. Specifically, silicon (Si) may be used.

Additionally, another silicon containing material may be included as long as the material does not affect the intended effect of the present invention, in addition to the silicon active material. For example, SiO, SiO₂, or a mixture thereof; an Sn-based material, such as, Sn, SnO, or SnO₂; a carbon-based material, such as artificial graphite, natural graphite, amorphous hard carbon, or low crystalline soft carbon; a metal composite oxide, such as lithium titanium oxide; or a mixture of two thereof may be included.

Specifically, the silicon active material is a component that causes electrochemical reaction as the result of binding with lithium ions that move from the positive electrode at the time of charging reaction, and has a high theoretical capacity of 4,200 mAh/g. In the case in which the content of the silicon active material included in the negative electrode mixture is higher, it is possible to manufacture a higher-capacity battery cell. The negative electrode active material included in the negative electrode mixture may be constituted by 80% or more, specifically 90% or more, more specifically 100%, of the silicon active material.

Meanwhile, in order to prevent unnecessary waste of the positive electrode or the negative electrode due to non-uniformity between the positive electrode and the negative electrode at the time of manufacture of the electrode assembly, high capacity of the silicon active material must be considered. Specifically, the loading amount of the positive electrode may be four to ten times, more specifically four to six times, the loading amount of the negative electrode.

The D50 particle size of silicon particles may range from 0.1 µm to 20 um, from 0.2 µm to 15 µm, from 0.8 µm to 10 µm, from 1 µm to 8 um, or from 2 µm to 7 µm. The silicon particles having the D50 particle size range are advantageous in forming a conductive network even though a conductive agent having the same content is used, compared to silicon particles having the average particle size greater than or less than the above particle size range.

In the specification of the present application, the "D50 particle size" is a typical diameter of two or more kinds of particles having different particle sizes, and is a particle size equivalent to a weight percent of 50% in a particle size distribution curve. That is, the D50 particle size means the diameter of particles equivalent to 50% of the accumulated weight of particles in the particle size distribution curve, and is understood as the same meaning as the diameter of particles equivalent to the size of a sieve that allows 50% of all particles to pass therethrough.

The average particle size of the silicon particles may be measured through X-ray diffraction (XRD) analysis or using an electron microscope (SEM or TEM).

The binder, the conductive agent, and components added as needed are the same as in description of the positive electrode.

In addition, other components, such as a viscosity modifier and an adhesion promoter, may be further included selectively or in combination of two or more thereof.

The viscosity modifier is a component that adjusts viscosity of the electrode mixture such that a process of mixing the electrode mixture and a process of applying the electrode mixture onto the current collector are easily performed. The viscosity modifier may be added so as to account for up to 30 weight% based on the total weight of the negative electrode mixture. Carboxymethyl cellulose or polyvinylidene fluoride may be used as an example of the viscosity modifier. However, the present invention is not limited thereto.

The adhesion promoter is an auxiliary component that is added in order to increase force of adhesion of the active material to the current collector, and may be added so as to account for 10 weight% or less, compared to the binder. For example, oxalic acid, adipic acid, formic acid, an acrylic acid derivative, or an itaconic acid derivative may be used as the adhesion promoter.

The separator includes a separator substrate made of a porous material, an inorganic layer formed on at least one surface of the separator substrate, and a conductive layer formed on the outer surface of the inorganic layer.

A thin insulative film having high ionic permeability and mechanical strength is used as the separator substrate. The pore diameter of the separator may generally range 0.01 µm to 10 µm, and the thickness of the separator may generally range 5 µm to 300 µm. As the material for the separator, for example, a sheet or non-woven fabric made of an olefin-based polymer, such as polyethylene or polypropylene, which exhibits chemical resistance and hydrophobicity, glass fiber, or polyethylene is used. In the case in which a solid electrolyte, such as a polymer, is used as an electrolyte, the solid electrolyte may also function as the separator.

The separator substrate is coated with a mixture of inorganic particles and a binder polymer to form an inorganic layer. The inorganic layer is formed on the porous separator substrate. The separator including the inorganic layer has an advantage of high heat resistance, compared to a conventional separator including only a separator substrate.

In general, lithium ions that move from the positive electrode to the negative electrode in the lithium secondary battery may be plated on the surface of the negative electrode, whereby dendrites may be formed. When the positive electrode and the negative electrode are connected to each other as the result of growth of the dendrites, current flows therebetween, whereby self-discharge occurs or a low voltage phenomenon occurs. In the case in which a porous structure having irregular pores formed therein, as in the separator substrate and the inorganic layer, is included, it is possible to inhibit growth of the dendrites.

Also, in the case in which the size of the pores formed in the inorganic layer is less than the size of the pores formed in the separator substrate, i.e. in the case in which the inorganic layer has a smaller and more complicated pore structure than the separator substrate, it is possible to further inhibit growth of the dendrites toward the positive electrode.

The inorganic material constituting the inorganic layer is not particularly restricted as long as the inorganic material is generally used when an inorganic layer of a separator for secondary batteries is manufactured, and may be at least one selected from the group consisting of (a) an inorganic material having piezoelectricity and (b) an inorganic material having lithium ion transfer ability.

The inorganic material having piezoelectricity, which means a material that is a nonconductor at atmospheric pressure but has a physical property, such as electrical conduction, due to a change in internal structure thereof when predetermined pressure is applied thereto, is a material that has a permittivity constant of 100 or more, i.e. high permittivity, and is configured such that one surface thereof is charged with positive electricity while the other surface thereof is charged with negative electricity when predetermined pressure is applied thereto so as to be tensed or compressed, whereby a potential difference is generated between the opposite surfaces thereof.

In the case in which the inorganic material having the above characteristics is used as a porous active layer component, when internal short circuit occurs between the positive electrode and the negative electrode due to external impact caused by a needle-shaped conductor, the positive electrode and the negative electrode do not directly contact each other due to the inorganic layer formed on the separator by coating, and a potential difference is generated in the particles due to piezoelectricity of the inorganic material, whereby electrons move between the positive electrode and the negative electrode, i.e. microcurrent flows therebetween, and therefore voltage of the battery is slowly reduced and thus safety of the battery is improved.

The inorganic material having piezoelectricity may be, for example, at least one selected from the group consisting of BaTiO₃, Pb(Zr,Ti)O₃ (PZT), Pb₁₋ₓLaₓZr_{1-y}Ti_{y}O₃ (PLZT), Pb (Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, and a mixture thereof. However, the present invention is not limited thereto.

The inorganic material having high lithium ion transfer ability refers to an inorganic material that contains a lithium element but moves lithium ions without storage of lithium. The inorganic material having lithium ion transfer ability is capable of transferring and moving lithium ions due to a kind of defect present in a particle structure thereof. Consequently, lithium ion conductivity in the battery may be improved, whereby performance of the battery may be improved.

The inorganic material having lithium ion transfer ability may be, for example, at least one selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0<x<4, 0<y<13), such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1,0<w<5), such as Li_{3.25}Ge_{0.25}P_{0.75}S₄, lithium nitride (LiₓN_{y}, 0<x<4, 0<y<2), such as Li₃N, SiS₂-based glass (LiₓSi_{y}S_{z}, 0<x<3, 0<y<2, 0<z<4), such as Li₃PO₄-Li₂S-SiS₂, P₂S₅-based glass (LiₓP_{y}S_{z}, 0<x<3, 0<y<3, 0<z<7), such as LiI-Li₂S-P₂S₅, and a mixture thereof. However, the present invention is not limited thereto.

In addition, the inorganic material may be a metal hydroxide or a metal oxide hydroxide represented by the following formula.

M(OH)ₓ (where M is B, Al, Mg, Co, Cu, Fe, Ni, Ti, Au, Hg, Zn, Sn, Zr, or an oxide thereof, and x is an integer of 1 to 4)

The binder constituting the inorganic layer is not particularly restricted as long as the binder is generally used when an inorganic layer of a separator for secondary batteries is manufactured. For example, any one selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinylacetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, and carboxymethylcellulose or a mixture of two or more thereof may be used as the binder.

N-methyl-2-pyrrolidone (NMP), dimethylformaldehyde (DMF), tetrahydrofuran (THF), methylethylketone (MEK), dimethylacetamide (DMAC), or dimethyl sulfoxide (DMSO) may be used as a solvent necessary to compose the inorganic layer.

Since the electrode assembly according to the present invention includes the silicon active material, which undergoes a great change in volume due to charging and discharging, as the negative electrode active material, cracks may occur in the negative electrode mixture layer, or the negative electrode mixture layer may be easily broken and separated from the negative electrode current collector. As the result of the shape stability of the negative electrode mixture layer being reduced, a conductive network, which becomes a movement path of electrons, may be broken. That is, when the negative electrode mixture layer is broken, the conductive network may be cut, whereby the movement path of electrons may be interrupted, and therefore performance of the battery may be deteriorated.

In order to supplement breakage of the conductive network of the negative electrode mixture layer, the conductive layer is formed on the outermost surface of the separator that directly contacts the negative electrode. Even when the negative electrode mixture layer is broken due to overexpansion and overcontraction of the silicon active material, therefore, the function of the conductive network of the damaged negative electrode mixture layer may be supplemented by the conductive layer.

The conductive layer may basically include a conductive agent having electrical conductivity. In addition, the conductive layer may further include a binder in order to maintain binding between the conductive agents and to secure force of adhesion to the inorganic layer.

The conductive agent is not particularly restricted, as long as the conductive agent exhibits high conductivity without inducing any chemical change in a battery to which the conductive agent is applied. For example, graphite, such as natural graphite or artificial graphite; carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as a zinc oxide or potassium titanate; a conductive metal oxide, such as a titanium oxide; or a conductive material, such as a polyphenylene derivative, may be used as the conductive agent.

The binder is a component assisting in binding between the conductive agents while not inducing any chemical change in a battery to which the binder is applied. As examples of the binder, there may be used polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene terpolymer, styrene butadiene rubber, fluoro rubber, and various copolymers.

In a concrete example, the conductive layer may be formed so as to have a thickness equivalent to 80% to 120% of the D50 particle size of the silicon active material.

In the case in which the thickness of the conductive layer is increased, a possibility of maintaining the conductive network of the negative electrode mixture layer is also increased. Since the overall thickness of the separator is increased, however, the distance between the electrodes is increased. As a result, ionic conductivity may be deteriorated and output of the battery cell may be reduced.

Meanwhile, in consideration of the fact that a breakage phenomenon mainly occurs at the surface of the negative electrode mixture layer since current density is concentrated on the surface of the negative electrode mixture layer and the fact that the silicon active material expands by about 130% to 150%, it is preferable for the conductive layer to be added so as to wrap the silicon active material when the silicon active material protrudes as the result of expansion thereof at the time of full charging.

Also, in the case in which the conductive layer is formed so as to have a thickness less than the D50 particle size of the silicon active material, the inorganic layer may be enlarged when the silicon active material maximally expands. Resistance of the silicon active material extended to the inorganic layer, which has no conductivity, is abruptly increased.

For this reason, the thickness of the conductive layer may be selected within a range of 80% to 120% of the particle size of the silicon active material.

In a concrete example, a first inorganic layer may be formed on one surface of the separator substrate, and a second inorganic layer may be formed on the other surface of the separator substrate, and the conductive layer may be formed on only the inorganic layer that is located so as to face the negative electrode, which is one of the first inorganic layer and the second inorganic layer.

For example, a dip coating method may be used to form the first inorganic layer and the second inorganic layer, and a die coating method or a slot coating method may be used to form the conductive layer.

In the case in which the conductive layer is formed on only the inorganic layer that is located so as to face the negative electrode, as described above, it is possible to supplement a problem of breakage of the negative electrode mixture and to minimize an increase in thickness of the separator. Consequently, it is possible to prevent a decrease in energy density, compared to the case in which the conductive layer is formed on each of the first inorganic layer and the second inorganic layer.

However, the positive electrode mixture layer may be broken or cracked as the result of repeated expansion and contraction of the positive electrode mixture layer during repeated charging and discharging of the battery cell. In the case in which the conductive layer is formed on each of the first inorganic layer and the second inorganic layer, therefore, the conductive network of the positive electrode and the negative electrode may be supplemented even when the conductive network is broken.

In a concrete example, the conductive layer may be configured to have a porous structure.

Since the negative electrode according to the present invention includes the silicon active material, which has a great change in volume, extension of the expanded silicon active material to the inorganic layer of the separator is prevented by the provision of the conductive layer. Additionally, in the case in which the conductive layer is configured to have a porous structure, the conductive layer contracts when the silicon active material expands, whereby an increase in volume due to expansion of the silicon active material is inhibited. As a result, it is possible to mitigate an increase in overall thickness of the electrode assembly due to the expanded silicon active material.

Consequently, it is possible to reduce the degree of fluctuation in thickness of the electrode assembly that occurs as the result of charging and discharging of the battery cell.

In addition, since the conductive layer is configured to have a porous structure, it is possible to prevent deterioration in ionic conductivity of lithium ions.

The present invention provides a battery cell having the electrode assembly received in a prismatic metal can or a cylindrical metal can and a battery cell having the electrode assembly received in a pouch-shaped battery case made of a laminate sheet.

In addition, the present invention provides a battery pack including the battery cell as a unit cell and a device including the battery pack.

For example, the device may be a laptop computer, a netbook computer, a tablet PC, a mobile phone, an MP3 player, a wearable electronic device, a power tool, an electric vehicle (EV), a hybrid electric vehicle (HEV), a plug-in hybrid electric vehicle (PHEV), an electric bicycle (E-bike), an electric scooter (E-scooter), an electric golf cart, or an energy storage system. However, the present invention is not limited thereto.

The battery pack and the device are well known in the art to which the present invention pertains, and thus a detailed description thereof will be omitted.

Hereinafter, the present invention will be described with reference to the following examples. These examples are provided only for easier understanding of the present invention and should not be construed as limiting the scope of the present invention.

### <Example 1>

### Manufacture of positive electrode

In order to manufacture a positive electrode, 97.5 weight% of lithium nickel cobalt manganese oxide, as a positive electrode active material, 1.0 weight% of carbon black, as a conductive agent, and 1.5 weight% of polyvinylidene fluoride (PVdF), as a binder, were mixed in N-methyl-2-pyrrolidone to manufacture a positive electrode slurry.

An aluminum current collector having a thickness of 15 µm was prepared, and the aluminum current collector was coated with the positive electrode slurry until the loading amount of the positive electrode slurry was 600 mg/25 cm² to manufacture a positive electrode. The total thickness of the manufactured positive electrode was 162 µm.

### Manufacture of negative electrode

In order to manufacture a negative electrode, 80 weight% of silicon (Si) having a D50 particle size of 3 µm, as a negative electrode active material, 10 weight% of carbon black, as a conductive agent, and 10 weight% a binder were mixed in water to manufacture a negative electrode slurry.

A copper current collector having a thickness of 8 µm was prepared, and the copper current collector was coated with the negative electrode slurry until the loading amount of the negative electrode slurry was 100 mg/25 cm² to manufacture a negative electrode. The total thickness of the manufactured negative electrode was 58 µm.

### Manufacture of separator

A polyolefin-based separator substrate having a porous structure and a thickness of 9 µm was prepared, and inorganic layers were formed on opposite surfaces of the separator substrate by dip coating.

The sum of the thicknesses of the inorganic layers formed on the opposite surfaces of the separator substrate was set to 8.5 µm.

Carbon black and polyvinylidene fluoride-hexafluoropropylene (PVdF-HFP) were mixed in acetone in a ratio in weight% of 9:1 to manufacture a solution for conductive layers.

The solution for conductive layers was applied to one of the inorganic layers formed on the opposite surfaces of the separator substrate by slot coating so as to have a thickness of 2.0 µm to manufacture a separator having a conductive layer formed on one surface thereof.

The total thickness of the manufactured separator was 19.5 µm.

### Manufacture of battery cell

A separator was interposed between the positive electrode and the negative electrode manufactured as described above such that the surface of the separator having a conductive layer formed thereon faced the negative electrode to manufacture an electrode assembly, and an electrolytic solution was poured to manufacture a coin cell.

### <Example 2>

A battery cell was manufactured using a separator having a conductive layer formed thereon in the same manner as in Example 1 except that the thickness of the conductive layer formed on one surface of the separator was 3.5 µm and the total thickness of the separator was 21.0 µm.

### <Comparative Example 1>

A polyolefin-based separator substrate having a thickness of 9 µm was prepared, and inorganic layers were formed on opposite surfaces of the separator substrate by dip coating.

A separator having a total thickness of 17.5 µm, including the sum of thicknesses of the inorganic layers formed on the opposite surfaces of the separator substrate, which was 8.5 µm, was manufactured.

### <Comparative Example 2>

A polyolefin-based separator substrate having a thickness of 9 µm was prepared, and inorganic layers were formed on opposite surfaces of the separator substrate by dip coating.

A separator having a total thickness of 19.5 µm, including the sum of thicknesses of the inorganic layers formed on the opposite surfaces of the separator substrate, which was 10.5 µm, was manufactured.

### <Comparative Example 3>

A polyolefin-based separator substrate having a thickness of 9 µm was prepared, and inorganic layers were formed on opposite surfaces of the separator substrate by dip coating.

A separator having a total thickness of 21.0 µm, including the sum of thicknesses of the inorganic layers formed on the opposite surfaces of the separator substrate, which was 12 µm, was manufactured.

### <Experimental Example>

In order to evaluate lifespan of the battery cells manufactured according to Examples 1 and 2 and Comparative Examples 1 to 3, each of the battery cells was charged to 4.2 V at 1.0C and discharged to 3.2 V at 0.5C, which was performed 100 cycles. The results are shown in Table 1 below.

**[Table 1]**

| | Total thickness of separator (µm) | State of charge (%) |
|---|---|---|
| Example 1 | 19.5 | 90.0 |
| Example 2 | 21.0 | 91.1 |
| Comparative Example 1 | 17.5 | 81.2 |
| Comparative Example 2 | 19.5 | 79.0 |
| Comparative Example 3 | 21.0 | 77.7 |

Referring to Table 1 above, it can be seen that, in the case in which the separator including the conductive layer was used, the state of charge was 90% or more even after 100 cycles of charging and discharging.

When comparing Example 1 and Example 2 with each other, it can be seen that, in the case in which silicon particles having a D50 particle size of 3 µm were used as the negative electrode active material, when the conductive layer was formed so as to have a thickness of 3.5 µm greater than D50, as in Example 2, the conductive layer supplemented the conductive network function of the negative electrode active material even though cracks occurred in the negative electrode active material, whereby high cycle characteristics were maintained.

Consequently, it is preferable for the thickness of the conductive layer to be set in consideration of D50 of the silicon particles.

In addition, when comparing Example 1 and Comparative Example 2, which had the same total thickness of the separator, with each other and comparing Example 2 and Comparative Example 3, which had the same total thickness of the separator, with each other, cycle characteristics of Comparative Example 2 and Comparative Example 3 were measured to be considerably low, although the separators according to Comparative Example 2 and Comparative Example 3 had the same total thicknesses as the separators according to Example 1 and Example 2 as the result of forming the inorganic layer so as to have a large thickness.

In the case in which a separator having a conductive layer further formed on a separator substrate in addition to an inorganic layer is used, therefore, it can be seen that the conductive layer has remarkable effect on maintaining high cycle characteristics of a battery.

In addition, when comparing Comparative Examples 1 to 3, in which the separator substrates had the same thickness but the inorganic layers had different thicknesses, with each other, it can be seen that, since resistance of lithium ions to ionic conductivity is increased as the thickness of the inorganic layer is increased, cycle characteristics thereof were deteriorated.

Those skilled in the art to which the present invention pertains will appreciate that various applications and modifications are possible within the category of the present invention based on the above description.

### [Industrial Applicability]

As is apparent from the above description, in an electrode assembly according to the present invention, a conductive layer formed on the surface of a separator may function as a conductive network of a negative electrode mixture layer, whereby it is possible to prevent interruption of an electron movement path even when cracks are formed in the negative electrode mixture layer due to overexpansion and overcontraction of a negative electrode active material.

In addition, the thickness of the conductive layer is limited to within a predetermined range, whereby it is possible to prevent deterioration in ionic conductivity and output characteristics due to addition of the conductive layer.

In addition, since a high-capacity silicon active material is used, it is possible to form the negative electrode mixture layer so as to have the same capacity as but a smaller thickness than in the case in which a carbon negative electrode active material is used, whereby it is possible to increase energy density of a battery cell as the result of a decrease in thickness thereof.

## Claims

1. An electrode assembly comprising:
a positive electrode comprising a positive electrode mixture layer on at least one surface of a positive electrode current collector;
a negative electrode comprising a negative electrode mixture layer on at least one surface of a negative electrode current collector; and
a separator interposed between the positive electrode and the negative electrode, wherein
the negative electrode mixture layer comprises a silicon active material,
a conductive layer is on at least one surface of the separator, and
a thickness of the conductive layer is greater than 50% of a D50 particle size of the silicon active material.

2. The electrode assembly according to claim 1, wherein the separator comprises:
a separator substrate comprising a porous material;
an inorganic layer formed on at least one surface of the separator substrate; and
the conductive layer on an outer surface of the inorganic layer.

3. The electrode assembly according to claim 2, wherein
a first inorganic layer is on one surface of the separator substrate,
a second inorganic layer is on the other surface of the separator substrate, and
the conductive layer is on only one of the first inorganic layer and the second inorganic layer positioned so as to face the negative electrode.

4. The electrode assembly according to claim 1, wherein the conductive layer comprises a conductive agent and a binder.

5. The electrode assembly according to claim 1, wherein the negative electrode active material included in the negative electrode mixture layer comprises 100% of the silicon active material.

6. The electrode assembly according to claim 2, wherein the inorganic layer has a structure in which pores are present in the inorganic layer.

7. The electrode assembly according to claim 6, wherein a size of pores present in the inorganic layer is less than a size of pores present in the separator substrate.

8. The electrode assembly according to claim 1, wherein the conductive layer has a porous structure.

9. A battery cell having the electrode assembly according to any one of claims 1 to 8 received in a metal can or a battery case comprising a laminate sheet.

10. A battery pack comprising the battery cell according to claim 9 as a unit cell.

## Patentansprüche

1. Elektrodenanordnung, umfassend:
eine positive Elektrode, umfassend eine Mischschicht für eine positive Elektrode auf mindestens einer Oberfläche eines Stromabnehmers für eine positive Elektrode;
eine negative Elektrode, umfassend eine Mischschicht für eine negative Elektrode auf mindestens einer Oberfläche eines Stromabnehmers für eine negative Elektrode; und
einen zwischen der positiven Elektrode und der negativen Elektrode angeordneten Separator, worin
die Mischschicht für eine negative Elektrode ein Silicium-Aktivmaterial umfasst,
eine leitfähige Schicht auf mindestens einer Oberfläche des Separators vorhanden ist und
eine Dicke der leitfähigen Schicht größer ist als 50% einer D50-Teilchengröße des Silicium-Aktivmaterials.

2. Elektrodenanordnung gemäß Anspruch 1, worin der Separator umfasst:
ein Separatorsubstrat umfassend ein poröses Material;
eine anorganische Schicht, die auf mindestens einer Oberfläche des Separatorsubstrats ausgebildet ist; und
sich die leitfähige Schicht auf einer äußeren Oberfläche der anorganischen Schicht befindet.

3. Elektrodenanordnung gemäß Anspruch 2, worin
eine erste anorganische Schicht auf einer Oberfläche des Separatorsubstrats vorhanden ist,
eine zweite anorganische Schicht auf der anderen Oberfläche des Separatorsubstrats vorhanden ist und
die leitfähige Schicht nur auf der ersten anorganischen Schicht vorhanden ist und die zweite anorganische Schicht so angeordnet ist, dass sie der negativen Elektrode gegenüber liegt.

4. Elektrodenanordnung gemäß Anspruch 1, worin die leitfähige Schicht ein leitfähiges Mittel und ein Bindemittel umfasst.

5. Elektrodenanordnung gemäß Anspruch 1, worin das Aktivmaterial für eine negative Elektrode, das in der Mischschicht für eine negative Elektrode enthalten ist, 100% des Silicium-Aktivmaterials umfasst.

6. Elektrodenanordnung gemäß Anspruch 2, worin die anorganische Schicht eine Struktur aufweist, in der Poren in der anorganischen Schicht vorhanden sind.

7. Elektrodenanordnung gemäß Anspruch 6, worin die Größe der in der anorganischen Schicht vorhandenen Poren kleiner ist als die Größe der im Separatorsubstrat vorhandenen Poren.

8. Elektrodenanordnung gemäß Anspruch 1, worin die leitfähige Schicht eine poröse Struktur aufweist.

9. Batteriezelle, die eine Elektrodenanordnung gemäß einem der Ansprüche 1 bis 8 in einer Metalldose oder einem Batteriegehäuse umfassend einen Laminatbogen, aufgenommen aufweist.

10. Batteriepack, umfassend die Batteriezelle gemäß Anspruch 9 als Einheitszelle.

## Revendications

1. Ensemble d'électrodes comprenant :
une électrode positive comprenant une couche de mélange d'électrode positive sur au moins une surface d'un collecteur de courant d'électrode positive ;
une électrode négative comprenant une couche de mélange d'électrode négative sur au moins une surface d'un collecteur de courant d'électrode négative ; et
un séparateur interposé entre l'électrode positive et l'électrode négative, dans lequel
la couche de mélange d'électrode négative comprend un matériau actif en silicium,
une couche conductrice est sur au moins une surface du séparateur, et
une épaisseur de la couche conductrice est supérieure à 50 % de la taille de particule D50 du matériau actif en silicium.

2. Ensemble d'électrodes selon la revendication 1, dans lequel le séparateur comprend :
un substrat de séparateur comprenant un matériau poreux ;
une couche inorganique formée sur au moins une surface du substrat de séparateur ; et
la couche conductrice sur une surface externe de la couche inorganique.

3. Ensemble d'électrodes selon la revendication 2, dans lequel
une première couche inorganique est sur une surface du substrat de séparateur,
une deuxième couche inorganique est sur l'autre surface du substrat de séparateur, et
la couche conductrice est sur une seule de la première couche inorganique et de la deuxième couche inorganique positionnée de façon à faire face à l'électrode négative.

4. Ensemble d'électrodes selon la revendication 1, dans lequel la couche conductrice comprend un agent conducteur et un liant.

5. Ensemble d'électrodes selon la revendication 1, dans lequel le matériau actif d'électrode négative inclus dans la couche de mélange d'électrode négative comprend 100 % du matériau actif en silicium.

6. Ensemble d'électrodes selon la revendication 2, dans lequel la couche inorganique présente une structure dans laquelle des pores sont présents dans la couche inorganique.

7. Ensemble d'électrodes selon la revendication 6, dans lequel une taille des pores présents dans la couche inorganique est inférieure à une taille des pores présents dans le substrat de séparateur.

8. Ensemble d'électrodes selon la revendication 1, dans lequel la couche conductrice présente une structure poreuse.

9. Élément de batterie présentant l'ensemble d'électrodes selon l'une quelconque des revendications 1 à 8 reçu dans une boîte métallique ou un boîtier de batterie comprenant une feuille stratifiée.

10. Bloc-batterie comprenant l'élément de batterie selon la revendication 9 en tant que cellule unitaire.
